# EUROPEAN PATENT APPLICATION

(11) **EP 4 501 486 A1**
(43) Date of publication of application: **05.02.2025**
(21) Application number: 23779723.8
(22) Date of filing: 17.03.2023
(51) Int. Cl.: B21K 21/12, B21J 5/10, B21J 9/04, B60G 21/055, B21D 28/16

(54) **METHOD FOR MANUFACTURING STABILIZER, AND BASE MATERIAL**

(30) Priority: 31.03.2022 JP 2022058972
(71) Applicant: NHK Spring Co., Ltd., Yokohama-shi, Kanagawa 236-0004 (JP)
(72) Inventor: MORI, Shogo, Yokohama-shi, Kanagawa 236-0004 (JP); WAKABAYASHI, Yutaka, Yokohama-shi, Kanagawa 236-0004 (JP); KOGA, Takuo, Yokohama-shi, Kanagawa 236-0004 (JP)
(74) Representative: Hoffmann Eitle
(86) International application number: PCT/JP2023/010528
(87) International publication number: WO 2023/189706

(57) **Abstract**

In a method of manufacturing a stabilizer according to the present invention, forging processing is performed on a base material and a stabilizer having a through hole at each of both ends is produced. The method includes: a recess forming step of forming a recess at a through hole formation position for the through hole of the stabilizer at an end of the base material; and a through hole forming step of forming a through hole by performing perforation at the through hole formation position including the recess.

## Description

### Field

The present invention relates to a method of manufacturing a stabilizer and a base material.

### Background

A stabilizer used in a vehicle or the like is attached to the vehicle to stabilize the posture of the vehicle. The stabilizer is formed by deforming, for example, a solid or hollow rod-shaped member (e.g., see Patent Literature 1). The stabilizer is connected to the vehicle at both ends thereof. The connection portions have flat shapes. In an end of the stabilizer, a through hole through which a fastening member such as a bolt is to be inserted is formed after the rod-shaped member is crushed and flattened.

### Citation List

### Patent Literature

Patent Literature 1: JP S63-273541 A

### Summary

### Technical Problem

A through hole at an end of a stabilizer is formed by perforating the end with a perforating member. In the case, the perforating member is worn by a load applied from a base material to the perforating member at the time of perforation. Improving the durability of the perforating member has been demanded to improve the number of times of use of the perforating member.

The present invention has been made in view of the above, and an object thereof is to provide a method of manufacturing a stabilizer and a base material capable of improving the durability of a perforating member that forms a through hole by perforation.

### Solution to Problem

To solve the above-described problem and achieve the object, a method according to the present invention of manufacturing a stabilizer having a through hole at each of both ends by performing forging processing on a base material includes: a recess forming step of forming a recess at a through hole formation position corresponding to the through hole of the stabilizer at an end of the base material; and a through hole forming step of forming a through hole by performing perforation at the through hole formation position including the recess.

Moreover, in the above-described method of manufacturing a stabilizer according to the present invention, in the recess forming step, the recess is formed while the end of the base material is flattened.

Moreover, the above-described method of manufacturing a stabilizer according to the present invention further includes a heating step of heating the end of the base material, and in the recess forming step, the recess is formed in the end heated in the heating step.

Moreover, the above-described method of manufacturing a stabilizer according to the present invention further includes a burr removing step of removing a burr in a region including the through hole formed in the through hole forming step.

Moreover, a base material according to the present invention for producing a stabilizer having a through hole formed at each of both ends by forging processing includes a recess formed at a through hole formation position corresponding to the through hole of the stabilizer at an end of the base material.

### Advantageous Effects of Invention

According to the present invention, an effect of improving the durability of a perforating member that forms a through hole by perforation can be exhibited.

### Brief Description of Drawings

FIG. 1 is a side view illustrating an example of a configuration of a stabilizer manufactured in an embodiment of the present invention.
FIG. 2 illustrates a manufacturing method in which the stabilizer in FIG. 1 is produced.
FIG. 3 illustrates a base material, before forging processing, for producing the stabilizer in FIG. 1.
FIG. 4 illustrates a configuration of an end of the base material before forging processing.
FIG. 5 is a cross-sectional view taken along line A-A in FIG. 4.
FIG. 6 illustrates a load change, at the time when a through hole is formed with a perforating member, depending on the presence or absence of a recess.
FIG. 7 illustrates a load change, at the time when a through hole is formed with a perforating member, depending on the presence or absence of a recess in a case where a solid base material is used.

### Description of Embodiments

An embodiment for carrying out the present invention (hereinafter, referred to as "embodiment") will be described below with reference to the accompanying drawings. Note that the drawings are schematic, and the relation between the thickness and the width of each of portions, the ratio between the thicknesses of the portions, and the like may be different from those in reality. Portions having different dimensional relations and ratios may be included in mutual drawings.

### (Embodiment)

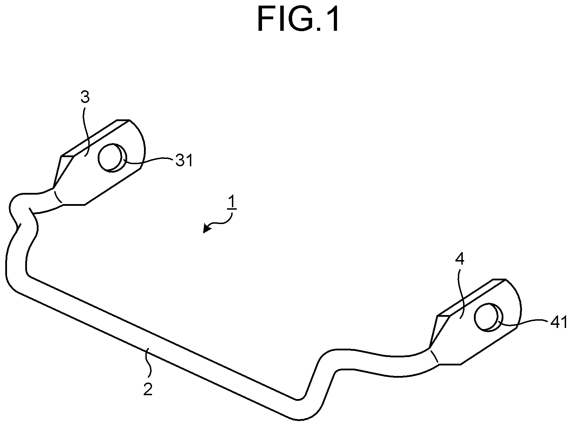

FIG. 1 is a side view illustrating an example of a configuration of a stabilizer manufactured in an embodiment of the present invention. A stabilizer 1 in FIG. 1 is formed of metal or various fiber-reinforced resins (e.g., GFRP). The stabilizer 1 includes a main body 2, a first end 3, and a second end 4. The main body 2 has both bent ends and a linearly extending central portion. The first end 3 is provided at one end of the main body 2. The second end 4 is provided at the other end of the main body 2.

The main body 2 extends in a shape of a column, for example, a circular column. Although an example in which the main body 2 is hollow will be described, the main body 2 may be solid.

The first end 3 has a flat plate shape. A through hole 31 penetrating in a plate thickness direction is formed in the first end 3.

The second end 4 has a flat plate shape. A through hole 41 penetrating in the plate thickness direction is formed in the second end 4.

For example, when the stabilizer 1 is provided in an automobile, the first end 3 is connected to one of suspensions arranged on the right and left sides, and the second end 4 is connected to the other suspension. In the case, the ends are fixed to the suspensions by fastening members such as bolts being inserted into the through holes.

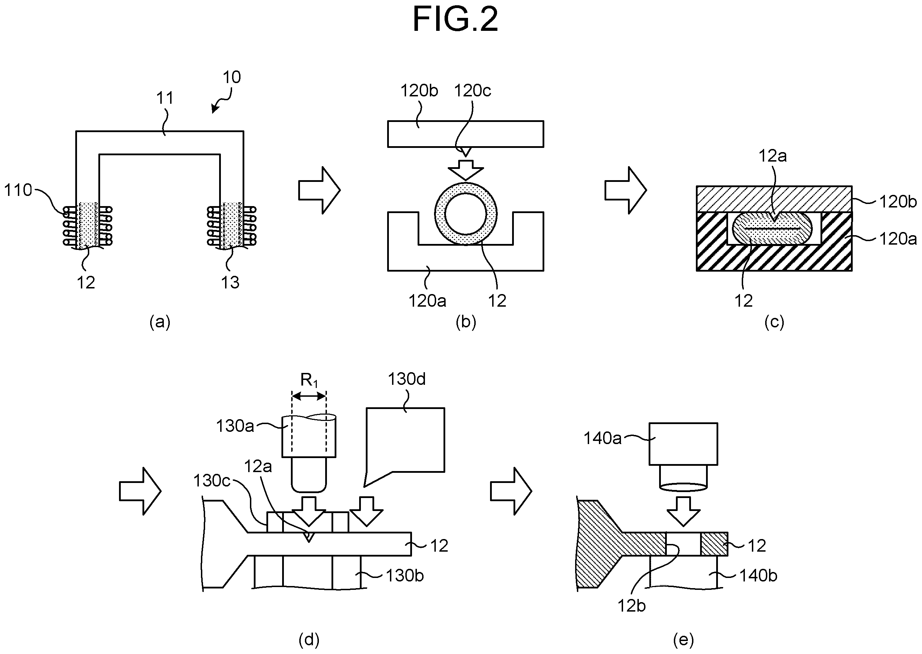

Subsequently, a method of manufacturing the stabilizer 1 will be described with reference to FIGS. 2 to 5. FIG. 2 illustrates a manufacturing method in which the stabilizer in FIG. 1 is produced. The stabilizer 1 is produced by performing forging on a base material.

A base material 10 is formed by bending both ends of a cylindrical member, and includes a main body 11, a first end 12, and a second end 13. First, the first end 12 and the second end 13 of the base material 10 are heated (see (a) of FIG. 2: heating step). In the heating processing, each of the ends is heated by using, for example, a heating coil 110.

After both the ends of the base material 10 are heated, each of the ends is pressed (see (b) of FIG. 2: flattening step). For example, as illustrated in (b) of FIG. 2, an end (first end 12 in FIG. 2) of the base material 10 is held by a holding member 120a, and the end placed on the holding member 120a is pressed by a pressing member 120b, whereby the end is crushed and flattened (see (c) of FIG. 2). In the case, a protrusion 120c is formed on the pressing member 120b at a position corresponding to a through hole formation position of the base material 10. Therefore, a recess 12a having the shape of the protrusion 120c is formed at the end of the base material 10 by the flattening (recess forming step). In the embodiment, the flattening step and the recess forming step are simultaneously performed.

After the first end 12 and the second end 13 are formed, cutting processing is performed (see (d) of FIG. 2). In the cutting processing, through hole forming processing (through hole forming step) and trimming (trimming step) are performed on the first end 12 and the second end 13. Here, (d) of FIG. 2 illustrates an example of processing the first end 12. The same applies to the second end 13.

The through hole is formed by perforating the first end 12 by using a perforating member 130a. In the case, the first end 12 is placed on a support member 130b, and pressed toward the support member 130b by a stripper 130c. The support member 130b and the stripper 130c have hollow portions through which a tip of the perforating member 130a can be inserted. The perforating member 130a penetrates the stripper 130c, and performs perforation at a through hole formation position of the first end 12 including the recess 12a, whereby the through hole (through hole 12b in (e) of FIG. 2) is formed in the first end 12.

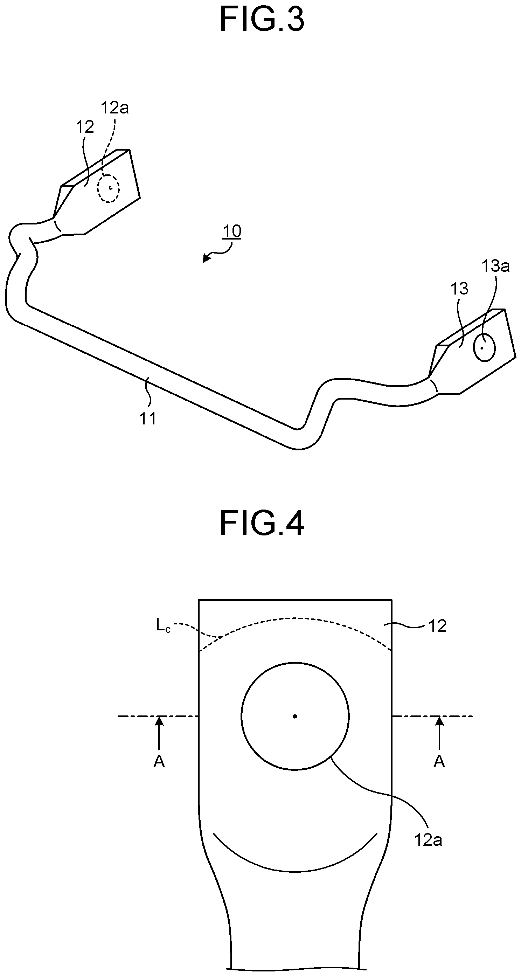

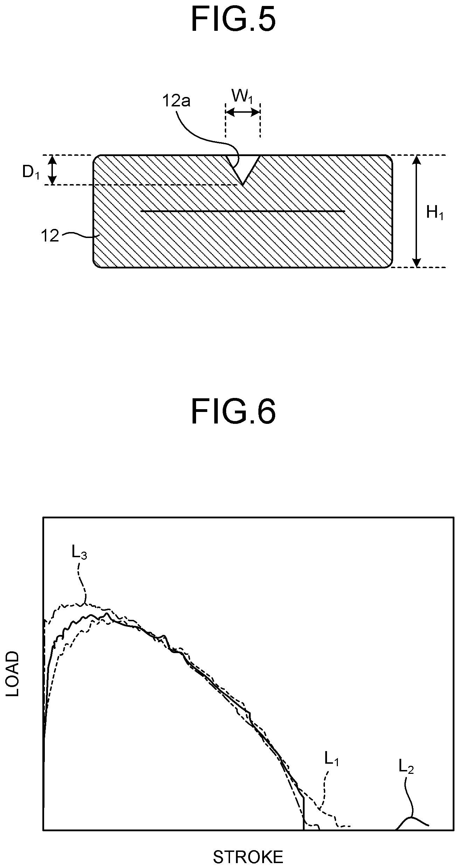

FIG. 3 illustrates a base material, before forging processing, for producing the stabilizer in FIG. 1. FIG. 4 illustrates a configuration of an end of the base material before forging. FIG. 5 is a cross-sectional view taken along line A-A in FIG. 4. The base material 10 in FIGS. 3 and 4 includes the main body 11, the first end 12, and the second end 13. The main body 11 has both bent ends. The first end 12 is provided at one end of the main body 11. The second end 13 is provided at the other end of the main body 11. Furthermore, the recess 12a and a recess 13a are formed at the first end 12 and the second end 13, respectively.

For example, the recess 12a has a hole shape forming conical internal space. The recess 12a is set in a region including the through hole formation position. A range in which the recess 12a is formed, for example, a region having a diameter of a width W₁ of an opening on the surface of the first end 12 are set in accordance with a region where the fastening member is disposed in the first end 12 (first end 3). In the case, the recess 12a is preferably formed at a position where a central axis of the perforating member 130a passes through the apex of the cone. Furthermore, the width W₁ is set in a range of 70% or more and less than 100% of a diameter R₁ of the perforating member 130a (i.e., diameter of through hole 12b). Furthermore, a depth D₁ of the recess is set in a range of 10% or more and 80% or less of a thickness H₁ of the first end 12. A load on the perforating member 130a can be reliably reduced by setting the width W₁ and the diameter R₁ in the above-described range. Although, in the embodiment, the recess 12a is described as forming conical space, the recess 12a may form another recessed shape such as frustum-shaped space.

Note that the same applies to the recess 13a.

Returning to FIG. 2, in the trimming, the outer shape of the first end 12 is formed by using a trim blade 130d (see (d) of FIG. 2). In the trimming, for example, as illustrated in FIG. 4, the outer shape of the first end 3 is formed by performing cutting along a processing line L_{C} of the first end 12 by using the trim blade 130d.

Note that either through hole formation or trimming may be performed first.

After the cutting processing, burr removing processing of removing a burr with a molding member 140a is performed (see (e) of FIG. 2: burr removing step). In the case, the first end 12 is placed on a support member 140b. A burr formed around the through hole 12b is crushed by sandwiching the first end 12 between the molding member 140a and the support member 140b, and the burr is removed. This causes the stabilizer 1 in FIG. 1 to be produced.

Here, the difference in a load applied to the perforating member 130a depending on the presence or absence of a recess in a base material will be described with reference to FIG. 6. FIG. 6 illustrates a load change, at the time when a through hole is formed with a perforating member, depending on the presence or absence of a recess. FIG. 6 illustrates an example in which a load change at the time when a through hole is formed with a perforating member in a case where the perforating member 130a has the diameter R₁ of 14.4 mm and the base material 10 has an end having the thickness H₁ of 7.3 mm is analyzed. A stroke corresponds to an entry length of the perforating member 130a from the surface of the base material. A curve L₁ indicates a load change in a case where the recess 12a has the width W₁ of 12.96 mm and the depth D₁ of 5.00 mm. A curve L₂ indicates a load change in a case where the recess 12a has the width W₁ of 12.96 mm and the depth D₁ of 3.00 mm. A curve L₃ indicates a load change in a case where the recess 12a is not provided. An analysis result in FIG. 6 indicates that the recess 12a reduces a load.

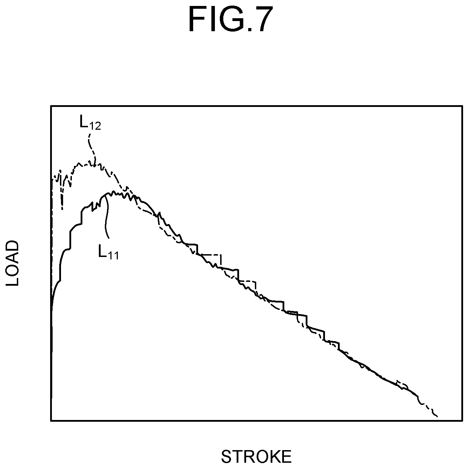

Furthermore, the difference in a load applied to the perforating member 130a depending on the presence or absence of a recess in a solid base material will be described with reference to FIG. 7. FIG. 7 illustrates a load change, at the time when a through hole is formed with a perforating member, depending on the presence or absence of a recess in a case where the solid base material is used. FIG. 7 illustrates an example in which a load change at the time when a through hole is formed with a perforating member in a case where the perforating member 130a has the diameter R₁ of 14.4 mm and the base material has an end having the thickness of 7.3 mm is analyzed. A curve L₁₁ indicates a load change in a case where the recess (corresponding to recess 12a) has the width W₁ of 12.96 mm and the depth D₁ of 5.00 mm. A curve L₁₂ indicates a load change in a case where the recess is not provided. An analysis result in FIG. 7 indicates that the recess reduces a load.

In the above-described embodiment of the present invention, a recess is formed at a through hole formation position, and a through hole is formed by perforating a region including the recess in the base material for producing the stabilizer. According to the embodiment, a recess reduces a load to be applied to the perforating member 130a, which can improve the durability of the perforating member.

Furthermore, according to the embodiment, a load to be applied to the recess at the time of perforation is reduced, which can inhibit warpage of an end generated by a load caused by perforation and a decrease in adhesion between inner peripheral surfaces.

Although the embodiment for carrying out the present invention has been described so far, the present invention should not be limited only by the above-described embodiment. For example, the present invention can be applied to a product in which a through hole is formed by perforation or on which trimming is performed.
Furthermore, although, in the embodiment, an example in which a recess is formed while an end of the base material 10 is flattened has been described, the flattening and the formation of the recess may be performed at different timings. That is, although, in the embodiment, the flattening step and the recess forming step are simultaneously performed, the flattening step and the recess forming step may be performed at different timings.

As described above, the present invention may include various embodiments not described here, and various design changes and the like can be made without departing from the technical idea specified by the claims.

### Industrial Applicability

As described above, a method of manufacturing a stabilizer according to the present invention and a base material are preferred to improve the durability of a perforating member that forms a through hole by perforation.

### Reference Signs List

1 STABILIZER
2, 11 MAIN BODY
3, 12 FIRST END
4, 13 SECOND END
10 BASE MATERIAL
12a, 13a RECESS
31, 41 THROUGH HOLE
120a HOLDING MEMBER
120b PRESSING MEMBER
120c PROTRUSION
130a PERFORATING MEMBER
130b, 140b SUPPORT MEMBER
130c STRIPPER
130d TRIM BLADE
140a MOLDING MEMBER

## Claims

1. A method of manufacturing a stabilizer having a through hole at each of both ends by performing forging processing on a base material, the method comprising:
a recess forming step of forming a recess at a through hole formation position corresponding to the through hole of the stabilizer at an end of the base material; and
a through hole forming step of forming a through hole by performing perforation at the through hole formation position including the recess.

2. The method of manufacturing a stabilizer according to claim 1, wherein, in the recess forming step, the recess is formed while the end of the base material is flattened.

3. The method of manufacturing a stabilizer according to claim 1 or 2, further comprising a heating step of heating the end of the base material,
wherein, in the recess forming step, the recess is formed in the end heated in the heating step.

4. The method of manufacturing a stabilizer according to claim 1, further comprising
a burr removing step of removing a burr in a region including the through hole formed in the through hole forming step.

5. A base material for producing a stabilizer having a through hole formed at each of both ends by forging processing, comprising
a recess formed at a through hole formation position corresponding to the through hole of the stabilizer at an end of the base material.
